**Europäisches Patentamt**

**European Patent Office**

**Office européen des brevets**

(19)

(11) Veröffentlichungsnummer : **0 171 535**
**B1**

(12) **EUROPÄISCHE PATENTSCHRIFT**

(45) Veröffentlichungstag der Patentschrift :
20.09.89

(51) Int. Cl.⁴ : **A 01 C   7/04**

(21) Anmeldenummer : **85106981.5**

(22) Anmeldetag : **05.06.85**

(54) Einzelkornsägerat.

(30) Priorität : **02.08.84 DE 8423025 U**

(43) Veröffentlichungstag der Anmeldung :
**19.02.86 Patentblatt 86/08**

(45) Bekanntmachung des Hinweises auf die Patenterteilung : **20.09.89 Patentblatt 89/38**

(84) Benannte Vertragsstaaten :
**BE CH DE FR IT LI NL**

(56) Entgegenhaltungen :
**EP--A-- 0 037 775
DE--B-- 1 066 786
FR--A-- 1 219 545
GB--A--    103 504
GB--A--    669 777**

(73) Patentinhaber : **SCHMOTZER AGRARTECHNIC GmbH
Rothenburger Strasse 45
D-8532 Bad Windsheim (DE)**

(72) Erfinder : **Schmotzer, Franz
Rothenburger Strasse 44
D-8532 Bad Windsheim (DE)**

(74) Vertreter : **Richter, Bernhard, Dipl.-Ing.
Beethovenstrasse 10
D-8500 Nürnberg 20 (DE)**

## Beschreibung

Die Erfindung betrifft ein Einzelkornsägerät, bei dem die zu säenden Körner sich in einer Saatgutkammer befinden und durch den Unterdruck einer Unterdruckkammer einzeln an Löchern dieser Kammer festgehalten werden, wobei die sich drehende Unterdruckkammer zumindest mit dem die Löcher aufweisenden Wandbreich durch das Saatgut der Saatgutkammer hindurchstreicht und es aufnimmt und wobei durch Luftzufuhr das jeweilige Korn von dem es haltenden Loch so abgeworfen wird, daß es in der gewünschten Säposition auf die Erde fällt. Ein derartiges Gerät ist aus GB-PS 669 777 bekannt. Dort ist eine Unterdruckkammer vorgesehen, deren Unterdruck durch eine gesonderte Saugleitung erzeugt wird. Die Unterdruckkammer nimmt das Saatgut aus einem Behälter auf, an dem sie vorbeistreicht. In die Unterdruckkammer wird eine Druckluftleitung geführt, welche in der Nähe der Ansaugöffnungen für das Halten der einzelnen Körner endet. Der aus der Mündung dieser Druckluftleitung strömende Luftstrahl soll die Körner von der sie jeweils haltenden Ansaugöffnung wegdrücken. Hierbei besteht die Gefahr, daß die beständig aus dieser Luftdruckleitung ausströmende Luft den Unterdruck in der vorgenannten Kammer in unzulässiger Weise mindert, unter Umständen sogar ganz aufhebt. Deswegen ist bei diesem Sägerät zwangsläufig sowohl eine Absaugleitung, als auch eine Druckluftleitung vorzusehen.

Ein anderes mit einer Unterdruckkammer arbeitendes Sägerät ist aus dem DE-GM 72 31 803 bekannt. Hierbei wird das am jeweiligen Loch durch den Unterdruck angesaugte Korn durch einen mechanischen Abstreifer in Form einer Rolle oder dergleichen abgeworfen. Dies bedingt, daß das Korn so weit durch das Loch ins Innere der Unterdruckkammer hineinragen muß, daß es mit Sicherheit vom Abstreifer (z. B. der Rolle) erfaßt und so weit nach außen gedrückt werden kann, daß es nicht mehr vom Unterdruck gehalten wird und abfällt. Dies ist aber nicht immer der Fall, mit der Folge, daß zwischen abgelegten Körnern Leerstellen verbleiben. Das Abfallen des Kornes hat man auch dadurch erreicht, daß das entsprechende Ansaugloch von innen her durch ein im Innern der Unterdruckkammer befindliches feststehendes Organ dicht abgeschlossen wurde. Dies hatte eine Unterbrechung des Saugeffektes an dieser Stelle und damit dort das Abfallen des Kornes zur Folge. Sowohl die zuvor erwähnten Mittel zum Rausdrücken oder Abstreifen des Korns, als auch die Mittel zum Abschliessen des Loches können sich durch ihre ständige Reibung an der Innenwand der Unterdruckkammer nachteiligerweise abnutzen. Hierdurch wird auf die Dauer die Brauchbarkeit des Gerätes in Frage gestellt.

In der US-PS 33 87 746 ist als Luftbetätigung zusätzlich zu der Unterdruckkammer eine Druckluftkammer vorgesehen, welche durch Zufuhr von Druckluft die zuvor durch den Unterdruck angesaugten Körner abwirft. Diese Konstruktion ist sehr aufwendig und störanfällig, da sie nebeneinander eine Unterdruckkammer und eine Überdruckkammer vorsehen muß.

Aus der GB-PS 103 504 ist ein Einzelkornsägerät bekannt, daß in seinem prinzipiellen Aufbau von dem des vorliegenden Einzelkornsägerätes abweicht. Es ist eine stationäre Platte mit einer in sie mündenden Druckleitung und ferner einer ebenfalls in diese Platte mündenden Unterdruckleitung vorgesehen, wobei die Unterdruckleitung sich innerhalb der Platte in einer kreisbogenförmigen verlaufenden Nut fortsetzt. An dieser Platte liegt luftdicht eine weitere, rotierende Platte an, die Öffnungen aufweist, welche bei der Drehung dieser Platte sich im Ansaugbereich der genannten kreisförmigen Nut befinden und beim Passieren dieser Nut aus einer an der anderen Plattenseite befindlichen Saatgutkammer das Saatgut aufnehmen. Gelangen dann beim weiteren Drehen der zweitgenannten Platte die die Körner haltenden Öffnungen in den Bereich der Druckleitung der erstgenannten, stationären Platte, so werden sie durch deren Druckluft aus den Öffnungen heraufgedrückt und durch ein Saatgutaustragsrohr dem Erdboden zugeführt. Zusätzlich zu den vorstehend erläuterten Platten ist ein gesondertes Injektorgerät vorgesehen, welches von einem Drucklufterzeuger Druckluft erhält. Diese Druckluft wird durch eine Düse in ein Rohr eingeführt und saugt dabei atmosphärische Luft aus einem Unterdruckrohr an, das mit seinem anderen Ende in der zuvor genannten Unterdruckleitung der stationären Platte endet. Die Druckluft wird dann weiter der Druckleitung zugeführt, welche ebenfalls in der bereits erläuterten stationären Platte endet und die Körner aus den Löchern herausdrückt. Die gesamte Anordnung ist in ihrem Aufbau relativ kompliziert, da zum einen die Anordnung aus der stationären und der rotierenden Platte mit den erläuterten Bauteilen geschaffen und außerdem noch als weiteres Bauteil die zuletzt beschriebene Anordnung aus Druckleitung, Ansaugleitung, Düse und weiterer Druckleitung vorgesehen und mit der erstgenannten Druckleitung verbunden werden muß. Zwei separate Geräte und diese Geräte verbindenden Leitungen verlangen relativ viel Platz, was bei einem auf dem Acker zu betreibenden Gerät nachteilig ist. Nachteilig ist ferner, daß der Saatgutaustrag vom oberen Bereich der Plattenanordnung über ein Rohr nach unten geführt werden muß. Bei einer solchen Fallhöhe werden die Fallgeschwindigkeiten voneinander abweichen, so daß die abgelegten Körner nicht immer den genau gleichen Abstand voneinander haben.

Die Aufgabe der Erfindung besteht demgegenüber darin, ein Einzelkornsägerät der Bauweise gemäß dem eingangs angegebenen Oberbegriff des Anspruches 1 dahingehend zu verbessern, daß eine im konstruktiven Aufbau wesentlich einfachere und damit störunanfälligere Luftbetätigung des Kornabwerfens geschaffen wird, die zugleich ganz oder teilweise den Unterdruck schafft.

Zur Lösung dieser Aufgabe ist ausgehend vom eingangs angegebenen Oberbegriff des Anspruches 1 vorgesehen, daß in der Unterdruckkammer ein Injektor einschließlich seiner Ansaugöffnung vorgesehen ist, dessen Mündung sich an der Innenseite der die Löcher aufweisenden Wand der Unterdruckkammer an der Abwurfstelle befindet und derart angeordnet ist, daß der Injektorstrahl auf das sich an der Mündung entlang bewegenden Loch gerichtet ist. Hiermit werden mehrere Vorteile erreicht. Die Luftbetätigung sorgt für einen sicheren Abwurf auch solcher Körner, welche nicht oder nur ungenügend durch das jeweilige Loch hindurch ins Innere der Unterdruckkammer ragen. Ein mechanischer Verschleiß ist vermieden. Die Injektordüse ist ein sehr einfaches, robustes, und damit störunanfälliges Bauteil. Sie bewirkt nicht nur das sogenannte Abwerfen bzw. Ausblasen des Kornes, sondern schafft und hält zugleich auch durch die Injektorwirkung in der Unterdruckkammer den notwendigen Unterdruck. Damit ist die bei US-PS 33 87 746 und GB-PS 669 777 zwangsläufig erforderliche und nachteilige Aufteilung in eine Unterdruckkammer und eine Überdruckkammer vermieden. Die Venturi-Öffnung kann sich direkt an der Öffnung befinden, welche das jeweilige Korn hält. Ein gewisser Abstand, wie es bei GB-PS 669 777 vorgesehen ist, entfällt. Das Sägerät nach der Erfindung ist sowohl gegenüber der Anordnung nach GB-PS 669 777 und insbesondere gegenüber dem Sägerät mit Zubehör nach GB-PS 103 504 wesentlich einfacher und damit in der Bauweise kompakter, sowie in der Herstellung kostengünstiger. Beim Einzelkornsägerät nach der Erfindung erfolgt die Ablage durch Abwurf des Kornes von der Mantelfläche des die Unterdruckkammer bildenden umlaufenden schmalen Zylinders, so daß diese Ablage ohne weiteres von der jeweils unten gelegenen Stelle (Ansaugöffnung) direkt in die Schar des Einzelkornsägerätes erfolgen kann, so daß die Fallhöhe des abgestoßenen Kornes minimal ist. Leitungen, welche das Korn gemäß GB-PS 103 504 führen und neben dem erläuterten Nachteil auch den der Gefahr eines Verstopfens haben, sind vermieden. Eine solche Leitung mit entsprechender Fallhöhe für das Korn ist ebenfalls bei GB-PS 669 777 gegeben.

Nur für den Fall, daß die Injektorwirkung für die Erzeugung des erforderlichen Unterdruckes nicht ganz ausreicht (dies kann bei größeren Einzelkornsägeräten der Fall sein) kann zusätzlich zu dem Injektor eine weitere in der Unterdruckkammer einen Unterdruck erzeugende Vorrichtung vorgesehen sein.

Eine weitere konstruktive Vereinfachung ergibt sich dadurch, daß die Injektordüse am Luftaustrittsende der Luftzufuhrleitung befestigt ist.

Ferner können zwecks Erzielung des erläuterten Vorteiles einer minimalen Fallhöhe des abgestoßenen Kornes die Injektordüse und das Luftaustrittsende der Luftzufuhrleitung sich gegenüber dem bei Betrieb untersten Bereich der im Betrieb umlaufenden Unterdruckkammer befinden.

Ein Ausführungsbeispiel der Erfindung ist nachstehend beschrieben und in der Zeichnung dargestellt. Hieraus ergeben sich weitere Einzelheiten.

In der Zeichnung zeigt:

Fig. 1: schematisch ein Ausführungsbeispiel der Erfindung in der Seitenansicht,

Fig. 2: einen Schnitt gemäß der Linie II-II in Fig. 1.

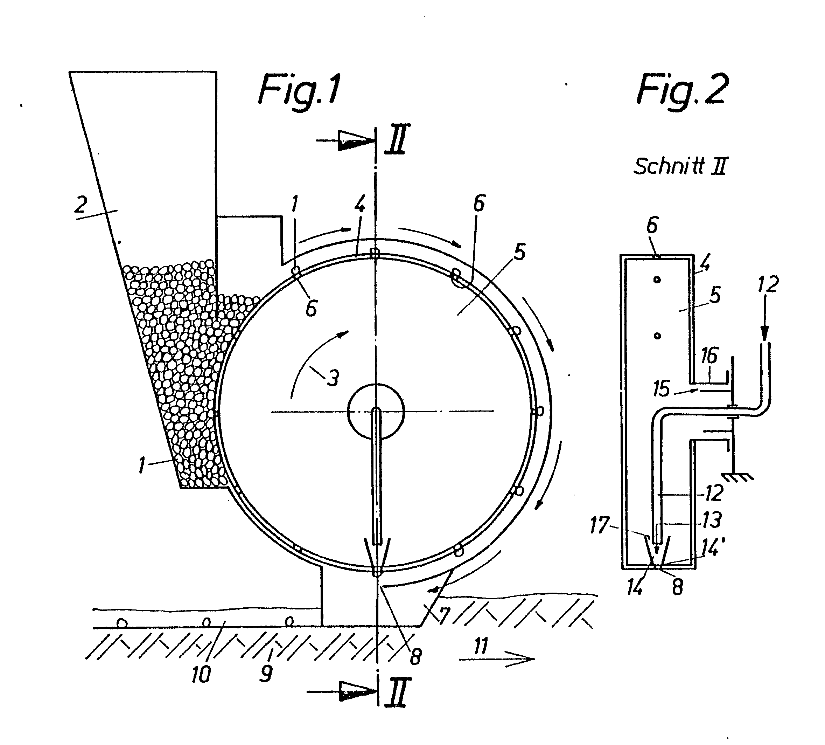

Die rein schematische Zeichnung zeigt von einem Einzelkornsägerät nur die zur Erläuterung der Erfindung notwendigen Teile. Die zu säenden Körner 1 werden in eine Saatgutkammer 2 eingefüllt. Ferner ist eine etwa walzenförmige, sich in Pfeilrichtung 3 drehende Unterdruckkammer 4 vorgesehen, an deren Mantelfläche sich im gleichmäßigen Abstand voneinander Löcher 6 befinden. Die Mantelfläche der Unterdruckkammer 4 durchstreift beim Drehen dieser Kammer den unteren Bereich der Saatgutkammer 2. Durch den Unterdruck im Kammerinnern 5 werden die einzelnen Körner 1 an die Löcher 6 angesaugt und daran gehalten (siehe Fig. 1).

An der Abwurfstelle 8 befindet sich ein Säschar 7, welches in der Erde 9 die Särinne 10 zieht (die Fahrtrichtung des Gerätes ist durch den Pfeil 11 angegeben). Eine Luftzuführung 12 endet in der Mündung 13 dieser Leitung 12, an der sich eine Injektordüse 14 befindet, bevorzugt an der Mündung 13 befestigt ist. Die Teile 12 bis 14 machen die Drehung der Kammer 4 nicht mit. Sobald die Kammer 4 mit dem jeweiligen Loch 6 unterhalb der Austrittsmündung 14' der Injektordüse 14 vorbeigeführt wird, drückt der bei 13 austretende Luftstrom das Korn weg, so daß es gemäß Fig. 1 in die Särinne 10 abgelegt wird.

Die Injektordüse 14 bewirkt mit ihrer Luftansaugung durch die Öffnung 17 gleichzeitig die Schaffung eines Unterdruckes im Kammerinnern 5. Falls dies nicht ausreicht, kann zusätzlich, z. B. gemäß Pfeil 15 innerhalb des Kammerachsstutzens 16 Luft aus dem Kammerinnern 5 abgesaugt werden, z. B. durch eine außerhalb der Kammer befindliche und in der Zeichnung nicht dargestellte Pumpe.

## Patentansprüche

1. Einzelkornsägerät, bei dem die zu säenden Körner (1) in einer Saatgutkammer (2) befinden und durch den Unterdruck einer Unterdruckkammer (4, 5) einzeln an Löchern (6) dieser Kammer festgehalten werden, wobei die sich drehende Unterdruckkammer zumindest mit dem die Löcher aufweisenden Wandbereich durch das Saatgut (1) der Saatgutkammer (2) hindurchstreicht und es aufnimmt und wobei durch Luftzufuhr das jeweilige Korn (1) von dem es haltenden Loch so abgeworfen wird, daß es in der gewünschten Säposition auf die Erde fällt, dadurch gekennzeichnet, daß in der Unterdruckkammer (4, 5) ein Injektor (13, 14) einschließlich seiner Ansaugöffnung (17) vorgesehen ist, dessen Mündung (14') sich an der Innenseite der die Löcher (6) aufweisenden Wand (4) der Unterdruckkammer an der Abwurfstelle (8) befindet und derart angeordnet ist, daß der Injektorstrahl (13) auf das sich an der Mündung (14') entlang bewegenden Loch (6) gerichtet ist.

2. Sägerät nach Anspruch 1, dadurch gekennzeichnet, daß zusätzlich zu dem Injektor (13, 14) eine weitere in der Unterdruckkammer (4, 5) einen Unterdruck erzeugende Vorrichtung vorgesehen ist.

3. Sägerät nach Anspruch 1 oder 2, dadurch gekennzeichnet, daß die Injektordüse (14) am Luftaustrittsende (13) der Luftzufuhrleitung (12) befestigt ist.

4. Sägerät nach einem der Ansprüche 1 bis 3, dadurch gekennzeichnet, daß die Injektordüse (14) und das Luftaustrittsende (13) der Luftzufuhrleitung (12) sich gegenüber dem untersten Bereich der umlaufenden Unterdruckkammer (4, 5) befinden.

## Claims

1. Pneumatic spacing drill in which the grains to be sown (1) are in a seed chamber (2) and by means of the vacuum in a vacuum chamber (4, 5) they are securely held individually in holes (6) in this vacuum chamber, whereby at least the wall region containing the holes in the rotating vacuum chamber passes gently through the seeds (1) in the seed chamber (2) and picks them up, and whereby, as a result of supplying air, the grain (1) in question is thrown from the hole retaining it in such a way that it falls on the ground in the desired sowing position, characterized in that an injector (13, 14), including its intake opening (17), is provided in the vacuum chamber (4, 5), the mouth (14') of which injector is in the ejection position (8) on the inner side of the wall (4) containing the holes (6) in the vacuum chamber and is so arranged that the injector jet (13) is directed on the hole (6) moving along to the mouth (14').

2. Pneumatic spacing drill according to Claim 1, characterized in that in addition to the injector (13, 14) a further device is provided in the vacuum chamber (4, 5) producing a vacuum.

3. Pneumatic spacing drill according to Claim 1 or 2, characterized in that the injector nozzle (14) is fastened to the air outlet end (13) of the air supply pipe (12).

4. Pneumatic spacing drill according to any one of Claims 1 to 3, characterized in that the injector nozzle (14) and the air outlet end (13) of the air supply pipe (12) are opposite the lowest region of the rotating vacuum chamber (4, 5).

## Revendications

1. Semoir monograine dans lequel les graines (1) à semer se trouvent dans un compartiment (2) à semence et sont fermement retenues de manière individuelle, sur des perforations (6) d'une chambre de dépression (4, 5), par la dépression régnant dans cette chambre, semoir dans lequel la chambre rotative de dépression effectue, au moins par la zone de paroi munie des perforations, un mouvement de balayage à travers la semence (1) du compartiment (2) à semence et prélève cette dernière, et dans lequel la graine considérée (1) est éjectée de la perforation qui la retient, par amenée d'air, de telle sorte qu'elle tombe sur la terre dans la position d'ensemencement souhaitée, caractérisé par le fait que la chambre de dépression (4, 5) renferme un injecteur (13, 14), y compris son orifice d'aspiration (17), injecteur dont l'ajutage (14') se trouve sur la face intérieure de la paroi (4) de la chambre de dépression qui présente les perforations (6), dans la zone d'éjection (8), et est disposé de telle sorte que le jet (13) de l'injecteur soit dirigé vers la perforation (6) se déplaçant le long de l'ajutage (14').

2. Semoir selon la revendication 1, caractérisé par le fait qu'un dispositif supplémentaire, engendrant une dépression dans la chambre de dépression (4, 5), est prévu en plus de l'injecteur (13, 14).

3. Semoir selon la revendication 1 ou 2, caractérisé par le fait que la buse d'injection (14) est fixée à l'extrémité (13) de sortie d'air du conduit (12) d'amenée d'air.

4. Semoir selon l'une des revendications 1 à 3, caractérisé par le fait que la buse d'injection (14) et l'extrémité (13) de sortie d'air du conduit (12) d'amenée d'air se trouvent en vis-à-vis de la région la plus basse de la chambre rotative de dépression (4, 5).

Fig.1

Fig.2

Schnitt II

EP 0 171 535 B1